# FASCICULE DE BREVET EUROPEEN

(11) **EP 1 553 238 B1**
(45) Date de publication et mention de la délivrance du brevet: **25.06.2014**
(21) Numéro de dépôt: 04293157.6
(22) Date de dépôt: 29.12.2004
(51) Int. Cl.: E04B 5/48, H02G 3/38

(54) **Elément de construction pour plancher chauffant**
Bauteil für geheizten Fussboden
Building element for heated floor

(30) Priorité: 09.01.2004 FR 0400166
(43) Date de publication de la demande: 13.07.2005
(73) Titulaire: KP1, 84000 Avignon (FR)
(72) Inventeur: Paris, Jean-Marc, 84700 Sorgues (FR); Herreria, Christian, 84000 Avignon (FR); Abric, Laurent, 30150 Roquemaure (FR)
(74) Mandataire: Robert, Jean-Pierre

(56) Documents cités:
- DE-A- 2 742 429
- DE-B- 1 784 235
- FR-A- 2 695 986
- US-A- 5 042 569

## Description

La présente invention concerne un élément de construction pour plancher chauffant destiné principalement à assurer l'isolation thermique entre le réseau de canalisations ou de résistances de chauffage et la dalle du plancher afin que l'émission de chaleur soit principalement dirigée vers le haut.

### ARRIERE PLAN DE L'INVENTION

Il est connu de procéder à cette isolation thermique par la mise en place de plaques en matériau isolant sur un revêtement dit de ravoirage de la dalle de compression. Ce revêtement se présente en général sous la forme d'une chape de quatre à cinq centimètres d'épaisseur, dans laquelle on loge différentes gaines ou canalisations. Cette chape est réalisée sur le chantier, par coulée et lissage d'un béton approprié et forme une surface adaptée à recevoir les éléments d'isolation qui y sont placés, juxtaposés et clavetés entre eux.

Cette technique de construction de plancher est consommatrice de temps et de main d'oeuvre.

Le document DE 1 784 235 présente quant à lui une structure à éléments de ravoirage préfabriqués qui est inadaptée à l'intégration de gaines ou canalisations.

### OBJET DE L'INVENTION

Pour y remédier, l'invention propose une structure de plancher chauffant qui comprend des éléments de ravoirage préfabriqués.

### BREVE DESCRIPTION DE L'INVENTION

A cet effet l'invention a donc pour objet un élément de construction pour plancher chauffant tel que défini à la revendication 1.

La plaque de base peut être en un matériau thermoplastique thermoformé, ce matériau pouvant être ou non isolant.

On réalise ainsi une couche qui offre à la fois des propriétés d'isolation suffisantes pour qu'au-dessus de celle-ci on puisse installer un réseau de canalisations caloporteuses par exemple, et qui sous la partie principale d'isolation de cette couche que constitue la plaque de couverture, comporte des espaces suffisants pour faire courir toutes sortes de canalisations d'eau sanitaire chaude ou froide ou toutes sortes de gaines électriques pour l'installation de réseaux voire des tubes d'air comprimé ou de vide pour le nettoyage centralisé des locaux ainsi équipés.

D'autres caractéristiques et avantages de l'invention ressortiront de la description donnée ci-après d'un exemple de sa réalisation.

### BREVE DESCRIPTION DES DESSINS

Il sera fait référence aux dessins annexés parmi lesquels :
- la figure 1 illustre un élément de construction conforme à l'invention,
- la figure 2 est une coupe d'un plancher chauffant réalisé avec l'élément de la figure 1.

### DESCRIPTION DETAILLEE DE L'INVENTION

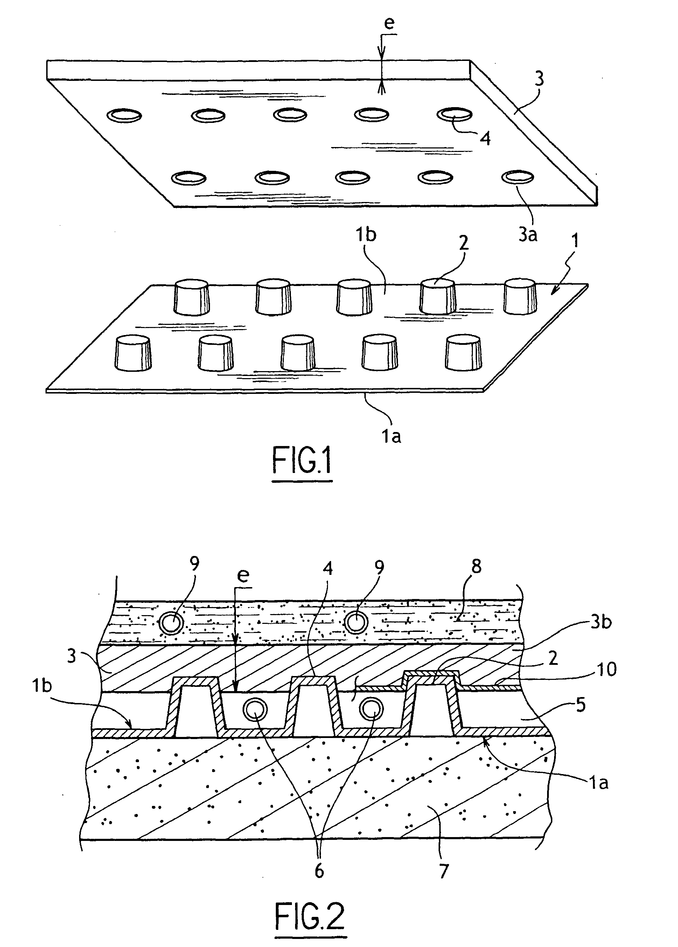

L'élément représenté à la figure 1 comporte une plaque de base 1 qui peut être réalisée en matière plastique injectée ou thermoformée et qui comporte une face inférieure 1a et une face supérieure 1b pourvue de plots 2 régulièrement espacés.

L'élément selon l'invention comporte également une plaque de couverture 3 formée elle dans un matériau isolant d'épaisseur e suffisante pour que la face inférieure 3a de cette plaque puisse être pourvue d'évidements 4 dont la profondeur est inférieure à l'épaisseur e de cette plaque. Chaque évidement 4 est destiné à venir coiffer chaque plot 2 de la plaque de base 1. La densité des plots et évidements par élément dépendra bien entendu de la charge de compression que doit supporter l'élément de construction et du matériau utilisé pour une charge donnée.

Comme on le voit sur la figure 2 lorsque les deux éléments sont posés l'un sur l'autre, il subsiste entre eux un espace 5 permettant la mise en place de canalisations 6 (eau sanitaire, air comprimé, gaines électriques, gaines d'aspiration,...). Dans le cas de cette figure la plaque de base 1 est réalisée par exemple par thermoformage d'une plaque en matériau thermoplastique approprié, chaque plot étant sensiblement conique et chaque évidement 4 étant également sensiblement conique de manière à s'ajuster correctement au sommet de chacun des plots.

A la figure 2 on a représenté sous la plaque 1 une dalle de compression 7 et au-dessus de la plaque de couverture 3 une chape 8 qui enrobe des tuyaux 9 de chauffage ou de climatisation du local dont le plancher représenté constitue le sol.

On a représenté à la partie droite de la figure 2 une variante de réalisation de l'élément de couverture qui est ici composite c'est-à-dire formé d'une feuille inférieure 10 avec les empreintes 4 pour coiffer les plots surmontée d'une couche isolante 3b collée ou liée à la feuille 10.

On a pas représenté sur les figures les moyens qui permettent de claveter les uns avec les autres les différents éléments de l'invention qu'il convient de juxtaposer sur une dalle de compression. Ces éléments de clavetage sont classiques du genre tenon - mortaise réalisés par exemple dans l'épaisseur de la plaque de couverture 1.

## Revendications

1. Elément de construction pour plancher chauffant, comportant une plaque de base (1) dont la face inférieure (1a) est plane et destinée à reposer sur une dalle de compression, et dont la face supérieure (1b) comporte une pluralité de plots (2) régulièrement espacés les uns des autres et une plaque de couverture (3) avec une face inférieure (3a) et une face supérieure définissant avec la face inférieure une épaisseur (e), la face inférieure de la plaque de couverture étant pourvue de logements (4) pour coiffer le sommet des plots (2) dont la profondeur est inférieure à l'épaisseur (e) de la plaque (3) de couverture et à la hauteur des plots pour autoriser la mise en place d'une canalisation entre les deux plaques, **caractérisé en ce que** la face supérieure de la plaque de couverture est destinée à supporter une chape enrobant des tuyaux caloporteurs, et **en ce que** la plaque de couverture est en un matériau isolant.

2. Elément selon la revendication 1, **caractérisé en ce que** la plaque de base (1) est en un matériau plastique thermoformé.

3. Elément selon la revendication 1 ou la revendication 2, **caractérisé en ce que** la plaque de base est en matériau isolant.

4. Elément selon l'une quelconque des revendications précédentes, **caractérisé en ce que** la plaque de couverture est composite avec une feuille inférieure (10) pourvue de logements (4) et une couche de matériau isolant (3b) surmontant la feuille supérieure.

## Patentansprüche

1. Bauteil für einen geheizten Fußboden, umfassend eine Grundplatte (1), deren Unterseite (1a) eben und dazu bestimmt ist, auf einer Druckbetonplatte aufzuliegen, und deren Oberseite (1b) eine Vielzahl von Klötzen (2) umfasst, die zueinander regelmäßig beabstandet sind, sowie eine Deckplatte (3) mit einer Unterseite (3a) und einer Oberseite, die mit der Unterseite eine Dicke (e) definiert, wobei die Unterseite der Deckplatte mit Aufnahmen (4) versehen ist, um die Spitze der Klötze (2) abzudecken, deren Tiefe kleiner als die Dicke (e) der Deckplatte (3) und die Höhe der Klötze ist, um das Verlegen eines Leitungssystems zwischen den beiden Platten zu gestatten, **dadurch gekennzeichnet, dass** die Oberseite der Deckplatte dazu bestimmt ist, eine Deckschicht zu tragen, die Schläuche für ein Wärmeträgermedium umschließt, und dass die Deckplatte aus einem Isoliermaterial ist.

2. Element nach Anspruch 1, **dadurch gekennzeichnet, dass** die Grundplatte (1) aus einem thermogeformten Kunststoff ist.

3. Element nach Anspruch 1 oder Anspruch 2, **dadurch gekennzeichnet, dass** die Grundplatte aus einem Isoliermaterial ist.

4. Element nach einem der vorhergehenden Ansprüche, **dadurch gekennzeichnet, dass** die Deckplatte ein Verbundwerkstoff ist, mit einer unteren Folie (10), die mit Aufnahmen (4) versehen ist, und einer Schicht (3b) aus Isoliermaterial, die über der oberen Folie angeordnet ist.

## Claims

1. Construction element for a heated floor, comprising a base plate (1) whose bottom face (1a) is flat and adapted to rest on a compression slab and whose top face (1b) includes a plurality of studs (2) regularly spaced from one another and a cover plate (3) with a bottom face (3a) and a top face defining with the bottom face a thickness (e), the bottom face of the cover plate including housings (4) for capping the top of the studs (2) whose depth is less than the thickness (e) of the cover plate (3) and less than the height of the studs to allow a pipe to be fitted between the two plates, **characterized in that** the top face of the cover plate is adapted to support a floor screed coating heat-exchange pipes and **in that** the cover plate is made of insulating material.

2. Element according to Claim 1, **characterized in that** the base plate (1) is made of a thermoformed plastic material.

3. Element according to claim 1 or claim 2, **characterized in that** the base plate is made of insulating material.

4. Element according to any one of the preceding claims, **characterized in that** the cover plate is a composite with a bottom sheet (10) including housings (4) and a layer of insulating material (3b) on top of the top sheet.
